(19) Europäisches Patentamt
European Patent Office
Office européen des brevets

(11) EP 4 300 624 A2

(12) **EUROPEAN PATENT APPLICATION**

(43) Date of publication:
**03.01.2024 Bulletin 2024/01**

(21) Application number: **23171625.9**

(22) Date of filing: **04.05.2023**

(51) International Patent Classification (IPC):
***H01M 4/134*** *(2010.01)* ***H01M 4/1395*** *(2010.01)*
***H01M 4/36*** *(2006.01)* ***H01M 4/38*** *(2006.01)*
***H01M 4/525*** *(2010.01)* ***H01M 4/587*** *(2010.01)*
***H01M 10/0525*** *(2010.01)* ***H01M 10/0567*** *(2010.01)*
***H01M 10/44*** *(2006.01)*

(52) Cooperative Patent Classification (CPC):
**H01M 10/0525; H01M 4/134; H01M 4/1395; H01M 4/364; H01M 4/386; H01M 4/525; H01M 4/587; H01M 10/0567; H01M 10/446;**
H01M 2300/0034; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.05.2022 KR 20220058829**

(71) Applicant: **SK On Co., Ltd.**
**Seoul 03161 (KR)**

(72) Inventors:
- **YOOK, Seung Hyun**
**34124 Daejeon (KR)**
- **JANG, Hwan Ho**
**34124 Daejeon (KR)**
- **KIM, Moon Sung**
**34124 Daejeon (KR)**
- **KIM, Hyo Mi**
**34124 Daejeon (KR)**
- **RYU, Sang Baek**
**34124 Daejeon (KR)**
- **CHUNG, Da Bin**
**34124 Daejeon (KR)**
- **HAN, Jun Hee**
**34124 Daejeon (KR)**
- **PARK, Da Hye**
**34124 Deajeon (KR)**

(74) Representative: **Prüfer & Partner mbB**
**Patentanwälte · Rechtsanwälte**
**Sohnckestraße 12**
**81479 München (DE)**

(54) **LITHIUM SECONDARY BATTERY AND METHOD OF FABRICATING THE SAME**

(57) A lithium secondary battery includes an electrolyte solution including a lithium salt, an organic solvent and a $CO_2$ supply source, a cathode including a cathode active material layer that includes a lithium metal oxide particle containing nickel, and an anode including an anode active material layer and a solid electrolyte interface (SEI) layer formed on the anode active material layer. The anode active material layer includes a silicon-based active material. A ratio of a C-O peak intensity to a Li-F peak intensity is 0.38 or more in an X-ray photoelectron spectroscopy spectrum of the SEI layer.

FIG. 1

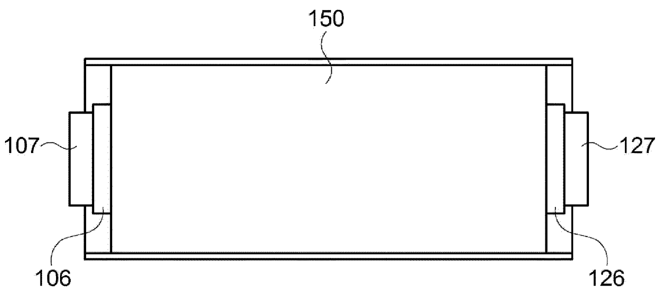




Processed by Luminess, 75001 PARIS (FR)

## Description

### BACKGROUND

#### 1. Field

The disclosures of this paten document relates to a lithium secondary battery and a method of fabricating the same. More particularly, the disclosures of this paten document relates to a lithium secondary battery including a lithium metal oxide-based cathode active material and a silicon-based anode active material and a method of fabricating the same.

#### 2. Description of the Related Art

A secondary battery which can be charged and discharged repeatedly has been widely employed as a power source of an electric vehicle, a mobile electronic device such as a camcorder, a mobile phone, a laptop computer, etc.

A lithium secondary battery is actively developed and employed due to high operational voltage and energy density per unit weight, a high charging rate, a compact dimension, etc.

For example, the lithium secondary battery may include an electrode assembly including a cathode, an anode and a separation layer interposed between the cathode and the anode, and an electrolyte solution immersing the electrode assembly. The lithium secondary battery may further include an outer case for accommodating the electrode assembly and the electrolyte solution.

For example, the cathode may include lithium metal oxide particles as a cathode active material, and the anode may include a graphite-based active material as a anode active material.

To obtain a high capacity of the lithium secondary battery, a silicon-based active material (Si, SiOx, Si/C, etc.) having a theoretical capacity greater than that of graphite is employed as an anode active material.

However, the silicon-based active material may cause a large volume change (about 300% to 400%) during charging and discharging of the lithium secondary battery, which may deteriorate chemical and mechanical stability of the anode active material layer and the lithium secondary battery.

### SUMMARY

According to an aspect of the present disclosures, there is provided a lithium secondary battery having improved capacity and life-span.

According to an aspect of the present disclosures, there is provided a method of fabricating a lithium secondary battery having improved capacity and life-span.

A lithium secondary battery includes an electrolyte solution including a lithium salt, an organic solvent and a $CO_2$ supply source, a cathode including a cathode active material layer, the cathode active material layer including a lithium metal oxide particle that contains nickel, and an anode including an anode active material layer and a solid electrolyte interface (SEI) layer formed on the anode active material layer, the anode active material layer including a silicon-based active material. A ratio of a C-O peak intensity to a Li-F peak intensity is 0.38 or more in an X-ray photoelectron spectroscopy spectrum of the SEI layer.

In some embodiments, the ratio of the C-O peak intensity to the Li-F peak intensity may be 0.5 or more.

In some embodiments, the SEI layer may include a $CO_2$-derived material.

In some embodiments, the SEI layer may include a reaction product of $CO_2$ and the silicon-based active material.

In some embodiments, the SEI layer may have a thickness of 0.8 μm or more.

In some embodiments, a content of the $CO_2$ supply source may be in a range from 1 wt% to 20 wt% based on a total weight of the electrolyte solution.

In some embodiments, the $CO_2$ supply source may include a compound represented by Chemical Formula 1 below.

[Chemical Formula 1]

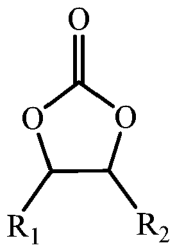

In Chemical Formula 1, $R_1$ and $R_2$ may each independently be hydrogen, halogen or a $C_1$-$C_3$ alkyl group, provided that at least one of $R_1$ and $R_2$ is F.

In some embodiments, the anode active material layer may further include a graphite-based active material.

In some embodiments, a content of nickel in the lithium metal oxide particle may be 80 mol% or more based on a total number of moles of all elements excluding lithium and oxygen.

In some embodiments, a content of silicon atoms may be in a range from 7 wt% to 15 wt% based on a total weight of the anode active material layer.

In a method of fabricating a lithium secondary battery, a preliminary lithium secondary battery is prepared. The preliminary lithium secondary battery includes an electrolyte solution including a lithium salt, an organic solvent and a $CO_2$ supply source, a cathode including a cathode active material layer, the cathode active material layer including a lithium metal oxide particle that contains nickel, and an anode including an anode active material layer, the anode active material layer including a silicon-based active material. The preliminary lithium secondary battery may be charged and discharged in a voltage range including a range of 2.8 V or less to form a solid electrolyte interface (SEI) layer on the anode active material layer. A ratio of a C-O peak intensity to a Li-F peak intensity is 0.38 or more in an X-ray photoelectron spectroscopy spectrum of the SEI layer.

In some embodiments, in preparation of the preliminary secondary lithium battery, the preliminary lithium secondary battery may be aged at a temperature of 30 °C to 80° C for 1 day to 50 days.

In some embodiments, in the formation of the SEI layer, $CO_2$ may be generated through a reaction between the lithium metal oxide particle and the $CO_2$ supply source.

In some embodiments, in the formation of the SEI layer, generated $CO_2$ may be reacted with a silicon-based active material.

In some embodiments, in the formation of the SEI layer, 90% or more of generated $CO_2$ may be converted into the SEI layer.

In some embodiments, performing the charging and discharging once each is defined as a charge and discharge cycle, and 10 or more of the charge and discharge cycles may be repeated to form the SEI layer.

A lithium secondary battery according to exemplary embodiments includes a cathode active material layer that may include high-nickel lithium metal oxide particles and an anode active material layer that includes a silicon-based active material. Thus, the lithium secondary battery may have improved capacity.

In exemplary embodiments, the lithium secondary battery may include a solid electrolyte interphase (SEI) layer including a material derived from $CO_2$ formed on the anode active material layer. Life-span properties of the lithium secondary battery may be further improved by the SEI layer.

According to embodiments of the present invention, a lithium secondary battery prepared by the method as described above is provided.

BRIEF DESCRIPTION OF THE DRAWINGS

FIGS. 1 and 2 are a schematic plan projection view and a cross-sectional view, respectively, illustrating a lithium secondary battery in accordance with exemplary embodiments.

FIG. 3 is a schematic cross-sectional view of an anode in accordance with exemplary embodiments.

FIG. 4 is a flow diagram schematically describing a method of fabricating a lithium secondary battery in accordance with exemplary embodiments.

FIGS. 5 and 6 are X-ray photoelectron spectroscopy (XPS) analysis spectra of SEI layers from Example 1 and Comparative Example 3.

DETAILED DESCRIPTION OF THE EMBODIMENTS

FIGS. 1 and 2 are a schematic plan projection view and a cross-sectional view, respectively, illustrating a lithium secondary battery in accordance with exemplary embodiments. FIG. 3 is a schematic cross-sectional view of an anode in accordance with exemplary embodiments.

Referring to FIGS. 1 and 2, a lithium secondary battery includes an electrode assembly 150 including a cathode 100 and an anode 130 facing the cathode 100, and an electrolyte solution (not illustrated) impregnating the electrode assembly 150.

For example, the lithium secondary battery may include a case 160 accommodating the electrode assembly 150 and the electrolyte solution.

In an embodiment, a separation layer 140 may be interposed between the anode 100 and the cathode 130. For example, the electrode assembly 150 may be formed by winding, stacking or z-folding of the separation layer 140 .

The cathode 100 may include a cathode current collector 105 and a cathode active material layer 110. For example, the cathode active material layer 110 may be formed on one surface or both surfaces of the cathode current collector 105.

Referring to FIG. 3, the anode 130 may include an anode current collector 125, an anode active material layer 120 and an SEI layer 122. For example, the anode active material layer 120 may be formed on one surface or both surfaces of the anode current collector 125. The SEI layer 122 may be formed on one surface of the anode active material layer 120. The other surface of the anode active material layer 120 facing the one surface of the anode active material layer 120 may be in contact with the anode current collector 125.

According to embodiments of the present disclosures, the SEI layer 122 may include a material derived from $CO_2$ in an amount equal to or greater than a predetermined value.

For example, the SEI layer 122 may be analyzed using an X-ray photoelectron spectroscopy (XPS) to determine whether the $CO_2$-derived material is included and to predict a content of the $CO_2$-derived material.

A composition ratio and a chemical bond state, etc., of elements in a sample may be confirmed by the X-ray photoelectron spectroscopy (XPS) analysis.

For example, in the XPS analysis spectrum of the SEI layer 122, a Li-F peak may be detected in a 686 eV to 688 eV region, and a C-O peak may be detected in a 286 eV to 288 eV region. As a content of the CO2-derived material increases, a C-O peak intensity may be increased.

According to embodiments of the present disclosures, in the XPS analysis spectrum, a ratio of a C-O peak intensity to a Li-F peak intensity is 0.38 or more. Accordingly, life-span properties of the lithium secondary battery may be improved.

In an embodiment, the peak intensity ratio may be 0.4 or more, preferably 0.45 or more, more preferably 0.5 or more, and further preferably 0.53 or more. Within this range, the life-span properties of the lithium secondary battery may be further improved.

In an embodiment, the peak intensity ratio may be 2 or less, 1.5 or less, 1 or less, or 0.75 or less.

In some embodiments, a thickness of the SEI layer 122 may be 0.4 $\mu$m or more, preferably 0.8 $\mu$m or more. In an embodiment, the thickness of the SEI layer 122 may be 5 $\mu$m or less, 4 $\mu$m or less, 3 $\mu$m or less, 2 $\mu$m or less, or 1.5 $\mu$m or less. Within this range, the life-span properties of the lithium secondary battery may be further improved.

For example, a lithium secondary battery including a lithium metal oxide particle containing a predetermined amount of nickel, a silicon-based active material, and a $CO_2$ supply source may be charged and discharged in a predetermined voltage range to form the SEI layer 122 having the peak intensity ratio in the above range (according to a method of fabricating a lithium secondary battery as will be described later).

The $CO_2$ supply source may refer to a material that reacts with the lithium metal oxide particle (e.g., lithium impurities such as LiOH and $Li_2CO_3$ on a surface of the lithium metal oxide particle) to form $CO_2$.

In an embodiment, the $CO_2$ supply source may include a fluorine-containing carbonate-based compound.

In some embodiments, the fluorine-containing carbonate-based compound may include a fluorine-containing cyclic carbonate-based compound. For example, the fluorine-containing cyclic carbonate-based compound may have a 5 to 7-membered cyclic structure.

In some embodiments, the fluorine-containing cyclic carbonate-based compound may include a fluorine atom directly bonded to a carbon atom in a ring, or an alkyl group (e.g., $-CF_3$) to which a fluorine atom is bonded.

In an embodiment, the $CO_2$ supply source may include a compound represented by Chemical Formula 1 below.

[Chemical Formula 1]

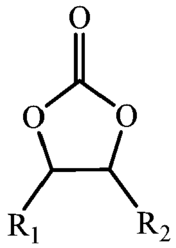

In Chemical Formula 1, $R_1$ and $R_2$ may each independently be hydrogen, halogen or a $C_1$-$C_3$ alkyl group provided that at least one of $R_1$ and $R_2$ is F.

In some embodiments, the $CO_2$ supply source may include fluoroethylene carbonate (FEC).

In some embodiments, the $CO_2$ supply source may include a material providing a $CO_2$ generation amount per unit weight similar to that of FEC under the same conditions (e.g., a cathode active material composition, an electrolyte composition, charging and discharging conditions, storage conditions, etc.). For example, when the $CO_2$ generation amount per unit weight of FEC is G, the $CO_2$ generation amount per unit weight of the material may be in a range from 0.5G to 1.5G, or from 0.75G to 1.25G.

In some embodiments, the $CO_2$ supply source may not include a direct $CO_2$ such as dry ice and a $CO_2$ gas.

In an embodiment, a content of the $CO_2$ supply source may be in a range from 1 weight percent (wt%) to 20 wt%, preferably from 1 wt% to 15 wt%, more preferably from 3 wt% to 10 wt% based on a total weight of the electrolyte solution. Within this range, $CO_2$ capable of forming and maintaining the SEI layer 122 having the peak intensity ratio may be continuously generated.

If the content of the $CO_2$ supply source is less than 1 wt%, the SEI layer having the peak intensity ratio may not be easily formed due to an insufficient amount of $CO_2$. If the content of the $CO_2$ supply source exceeds 20 wt%, $CO_2$ may be excessively generated to cause a vent.

The electrolyte solution may further include a lithium salt and an organic solvent. The organic solvent may be a non-aqueous organic solvent having a sufficient solubility for the lithium salt.

In an embodiment, the organic solvent may include a carbonate-based solvent. In some embodiments, the carbonate-based solvent may include a cyclic carbonate-based solvent and a linear carbonate-based solvent. For example, the cyclic carbonate-based solvent may have a 5 to 7-membered cyclic structure.

In some embodiments, based on a total volume of the organic solvent, a content of the linear carbonate-based solvent may be greater than a content of the cyclic carbonate-based solvent.

In some embodiments, a volume ratio of the linear carbonate-based solvent relative to the cyclic carbonate-based solvent in the organic solvent may be greater than 1 and less than or equal to 9, from 2 to 7.5, or from 2 to 3.5.

In some embodiments, the organic solvent may further include an ester-based (carboxylate-based) solvent, an ether-based solvent, a ketone-based solvent, an alcohol-based solvent, etc.

For example, the ester-based solvent may include methyl acetate (MA), ethyl acetate (EA), n-propyl acetate (n-PA), 1,1-dimethylethyl acetate (DMEA), methyl propionate (MP), ethyl propionate (EP), etc.

For example, the ether-based solvent may include dibutyl ether, tetraethylene glycol dimethyl ether (TEGDME), diethylene glycol dimethyl ether (DEGDME), dimethoxyethane, tetrahydrofuran (THF), 2-methyltetrahydrofuran, etc.

For example, the ketone-based solvent may include cyclohexanone, and the alcohol-based solvent may include ethyl alcohol, isopropyl alcohol, etc.

The lithium salt may be expressed as $Li^+X^-$, and $X^-$ may be selected from $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

In some embodiments, the lithium salt may include $LiPF_6$.

In some embodiments, the lithium salt may be included in a concentration from 0.01 M to 5 M, preferably from 0.01 M to 2 M in the organic solvent.

For example, the cathode current collector 105 may include stainless steel, nickel, aluminum, titanium, copper or an alloy thereof.

For example, the cathode active material layer 110 may include a cathode active material, a cathode binder, a conductive material, etc.

In an embodiment, the cathode active material may include a lithium metal oxide particle containing nickel.

In an embodiment, the lithium metal oxide particle may contain 80 mol% or more, preferably 83 mol% or more,

more preferably 85 mol% or more, further preferably 88 mol% of nickel among all elements except lithium and oxygen.

In some embodiments, the lithium metal oxide particle may contain 88 mol% to 98 mol%, preferably 88 mol% to 95 mol% of nickel among all elements other than lithium and oxygen. Within the above content range, a sufficient amount of $CO_2$ may be continuously generated by reacting the lithium metal oxide particle and the $CO_2$ supply source. Accordingly, the SEI layer having the peak intensity ratio in the above range may be easily formed and maintained.

For example, if the nickel content is too low (e.g., 60 mol% or less), the reaction between the lithium metal oxide particle and the $CO_2$ supply source may not be sufficiently induced, and the $CO_2$ supply source may be decomposed at the anode to directly form an SEI layer. In this case, the content of the $CO_2$-derived material in the SEI layer may become low, and the above-described peak intensity ratio range may not be satisfied. Further, a depletion rate of the $CO_2$ supply source may be relatively increased to deteriorate the life-span properties of the lithium secondary battery.

In an embodiment, the lithium metal oxide particle may further contain cobalt, manganese, etc.

In an embodiment, the lithium metal oxide particle may include a chemical structure or a crystal structure represented by Chemical Formula 2 below.

[Chemical Formula 2] $Li_xNi_{(1-a-b)}Mn_aM_bO_y$

In Chemical Formula 2, M may include at least one of Co, Al, Zr, Ti, Cr, B, Mg, Ba, Si, Y, W and Sr, and $0.9 \leq x \leq 1.2$, $1.9 \leq y \leq 2.1$, $0 < a+ b \leq 0.17$, and $0 < a < 0.1$.

In some embodiments, $0 < a+b \leq 0.15$, $0 < a+b \leq 0.12$, $0 < a+b \leq 0.1$, or $0 < a+b \leq 0.05$.

In an embodiment, the lithium metal oxide particle may further include a coating element or a doping element. For example, the coating element or the doping element may include Al, Ti, Ba, Zr, Si, B, Mg, P, Sr, W, La, etc.

The cathode active material may include a plurality of the lithium metal oxide particles. For example, an amount of the lithium metal oxide particles may be 50 wt% or more based on a total weight of the cathode active material. Preferably, the amount of the lithium metal oxide particles may be 60 wt% or more, 70 wt% or more, 80 wt% or more, or 90 wt% or more based on a total weight of the cathode active material.

In an embodiment, the cathode active material may substantially consist of the lithium metal oxide particles.

For example, the cathode binder may include an organic based binder such as polyvinylidenefluoride (PVDF), a polyvinylidene fluoride-hexafluoropropylene copolymer (PVDF-co-HFP), polyacrylonitrile, polymethylmethacrylate, etc., or an aqueous based binder such as styrene-butadiene rubber (SBR) that may be used with a thickener such as carboxymethyl cellulose (CMC).

The conductive material may include a carbon-based material such as graphite, carbon black, graphene, carbon nanotube, etc., and/or a metal-based material such as tin, tin oxide, titanium oxide, a perovskite material such as $LaSrCoO_3$ or $LaSrMnO_3$, etc.

For example, the anode current collector 125 may include gold, stainless-steel, nickel, aluminum, titanium, copper or an alloy thereof.

The anode active material layer 120 may include an anode active material, an anode binder, a conductive material, etc.

According to embodiments of the present disclosures, the anode active material includes a silicon (Si)-based active material.

For example, the silicon-based active material may include Si, SiOx (0<x<2), Si/C (a Si-carbon composite), SiO/C (a SiOx-carbon composite), a Si-Metal, etc. In this case, the capacity of the lithium secondary battery may be improved.

If the anode active material layer 120 includes the silicon-based active material, the life-span properties of the lithium secondary battery may be deteriorated due to a volume expansion, cracks/detachment, etc., of the active material and the active material layer during repeated charging and discharging of the lithium secondary battery.

However, according to embodiments of the present disclosures, the above-described defects may be reduced or avoided by the SEI layer 122 having the peak intensity ratio in the above range. Accordingly, the life-span properties of the lithium secondary battery may be improved.

In an embodiment, a content of silicon atoms may be in a range from 1 wt% to 15 wt% based on the total weight of the anode active material layer 120.

In some embodiments, the content of silicon atoms may be in a range from 3 wt% to 15 wt%, preferably from 5 wt% to 14 wt%, more preferably from 6 wt% to 13 wt%, even more preferably from 7 wt% to 13 wt% based on the total weight of the anode active material layer 120.

For example, if the content of silicon atoms in the anode active material layer is excessively increased, the organic solvent in the electrolyte solution may be also consumed to form the SEI layer, and the life-span properties of the lithium secondary battery may be deteriorated. If the content of silicon atoms in the anode active material layer is excessively decreased, the SEI layer derived from $CO_2$ may not be sufficiently formed to degrade the life-span properties of the lithium secondary battery. Within the content range of the silicon atoms, the consumption of the organic solvent

may be prevented, and a conversion ratio of $CO_2$ to the SEI layer may be further improved.

For example, if the content of the silicon atoms exceeds 15 wt%, a large amount of the organic solvent in the electrolyte may be consumed in the formation of the SEI layer. In this case, the Li-F peak intensity increases, and the improvement of life-span properties may be inhibited. If the content of the silicon atoms is less than 1 wt% by weight, $CO_2$ may not be sufficiently converted into the SEI layer, and a vent may occur.

In some embodiments, a content of nickel in the lithium metal oxide particle may be 88 mol% or more based on all elements except lithium and oxygen, the content of silicon atoms in the anode active material layer may be in a range from 7 wt% to 13 wt%, and the content of the $CO_2$ supply source in the electrolyte solution may be in a range from 3 wt% to 10 wt%.

Within these ranges, the amount of $CO_2$ generation and the conversion ratio of $CO_2$ to the SEI layer may be appropriately adjusted. Accordingly, the vent may be prevented and the life-span properties of the lithium secondary battery may be further improved.

In some embodiments, the anode active material may further include a lithium alloy, a carbon-based material, etc.

For example, the lithium alloy may include a metal element such as aluminum, zinc, bismuth, cadmium, antimony, silicon, lead, tin, gallium, indium, etc.

For example, the carbon-based active material may include a crystalline carbon, an amorphous carbon, a carbon complex, a carbon fiber, etc.

The amorphous carbon may include, e.g., a hard carbon, cokes, a mesocarbon microbead (MCMB) fired at a temperature of 1500 °C or less, a mesophase pitch-based carbon fiber (MPCF), etc. The crystalline carbon may include, e.g., artificial graphite, natural graphite, graphitized cokes, graphitized MCMB, graphitized MPCF, etc.

In an embodiment, the anode binder may include, e.g., an aqueous binder such as styrene-butadiene rubber (SBR). The anode binder may be used together with a thickener such as carboxymethyl cellulose (CMC).

The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like.

The lithium secondary battery according to exemplary embodiments may include a cathode lead 107 connected to the cathode 100 to protrude to an outside of a case 160, and an anode lead 127 connected to the anode 130 to protrude to the outside of the case 160.

For example, the cathode lead 107 may be electrically connected to the cathode current collector 105. The anode lead 127 may be electrically connected to the anode current collector 125.

For example, the cathode current collector 105 may include a cathode tab 106 at one side thereof. The cathode active material layer 110 may not be formed on the cathode tab 106. The cathode tab 106 may be integral with the cathode current collector 105 or may be connected to the cathode current collector 105 by, e.g., welding. The cathode current collector 105 and the cathode lead 107 may be electrically connected via the cathode tab 106.

The anode current collector 125 may include an anode tab 126 at one side thereof. The anode active material layer 120 may not be formed on the anode tab 126. The anode tab 126 may be integral with the anode current collector 125 or may be connected to the anode current collector 125 by, e.g., welding. The anode electrode current collector 125 and the anode lead 127 may be electrically connected via the anode tab 126.

The lithium secondary battery may be fabricated into a cylindrical shape using a can, a prismatic shape, a pouch shape, a coin shape, etc.

FIG. 4 is a flow diagram schematically describing a method of fabricating a lithium secondary battery in accordance with exemplary embodiments.

Referring to FIG. 4, a preliminary secondary lithium battery may be prepared (e.g., in a phase of S10). The preliminary lithium secondary battery may include a cathode including a cathode active material layer that includes a lithium metal oxide particle containing nickel; an anode including an anode active material layer that includes a silicon-based active material; and an electrolyte solution including a lithium salt, an organic solvent and a CO2 supply source.

The preliminary lithium secondary battery may be fabricated using the above-described lithium metal oxide particle, the silicon-based active material and the $CO_2$ supply source.

The preliminary lithium secondary battery may be charged and discharged in a voltage range including a range of 2.8 V or less (e.g., in a phase of S20).

The lithium metal oxide particle and the $CO_2$ supply source may react to generate $CO_2$ by the charging and discharging, and CO2 may react with the silicon-based active material to form an SEI layer including a material derived from $CO_2$.

90% or more of the generated $CO_2$ may be converted to the SEI layer. Accordingly, the SEI layer may have the peak intensity ratio within the above range, and the volume expansion and the vent of the lithium secondary battery due to a residual $CO_2$ may be prevented.

If the preliminary lithium secondary battery is charged and discharged in a voltage range exceeding 2.8 V, a

reaction between $CO_2$ and the silicon-based active material may be insufficient. As a result, only less than 50% of the generated $CO_2$ may be converted to the SEI layer, and the SEI layer having the peak intensity ratio in the above range may not be formed. Further, the residual $CO_2$ may be accumulated to cause the venting, thereby deteriorating the life-span properties of the lithium secondary battery.

In an embodiment, the charging and discharging once each is defined as a charge/discharge cycle, and the charge/discharge cycle may be performed 3 or more times, preferably 10 or more times, and more preferably 30 or more times.

In an embodiment, the secondary lithium battery may be CC/CV charged at 0.1 to 3 C-rate, 0.33 to 2.5 C-rate, 0.33 to 2 C-rate, or 0.5 to 1.5 C-rate. Additionally, the secondary lithium battery may be CC discharged at 0.33 to 3 C-rate, 0.33 to 2.5 C-rate, 0.33 to 2 C-rate, or 0.5 to 1.5 C-rate.

In some embodiments, the preliminary lithium secondary battery may be charged from less than a 5% state of charge (SOC) to a 80% to 100% SOC. Additionally, the preliminary lithium secondary battery may be discharged from the 80% to 100% of SOC to less than the 5% of SOC.

For example, the charging and discharging may be performed in a formation process of the lithium secondary battery or may be performed after the formation process.

In some embodiments, the secondary lithium battery may be stored at a temperature of 30°C to 80°C (e.g., aging). In an embodiment, the aging may be performed for 1 day to 50 days, 3 days to 40 days, 5 days to 30 days, or 10 days to 30 days.

In an embodiment, the aging may be performed before the charging and discharging.

For example, during the aging, a large amount of $CO_2$ may be generated due to the reaction between the lithium metal oxide particle and the $CO_2$ supply source. Thereafter, the preliminary lithium secondary battery may be repeatedly charged and discharged under the above-described voltage condition, so that the thick SEI layer may be formed in advance and may be firmly maintained for a long period.

When the lithium secondary battery is repeatedly charged and discharged in a voltage range exceeding 2.8 V, the SEI layer may be cracked due to repeated volume changes of the silicon-based active material. However, if the above-described charging and discharging are repeatedly performed in a plurality of cycles, the SEI layer may be continuously reformed or regenerated.

In an embodiment, in the preparation of the lithium secondary battery, a degassing process may not be performed. In a typical manufacturing process of a lithium secondary battery, the degassing process is performed during a formation process to release $CO_2$ in the lithium secondary battery to an outside of a case. However, according to exemplary embodiments of the present disclosures, $CO_2$ is used to form the SEI layer, so that the degassing process may be omitted.

## Examples and Comparative Examples

Lithium metal oxide particles having compositions shown in Table 1 below, carbon black and polyvinylidene fluoride (PVDF) were dispersed in N-methyl pyrrolidone (NMP) by a weight ratio of 98:1:1 to form a cathode slurry.

The cathode slurry was uniformly coated on an aluminum foil having a thickness of 12 μm, and then dried and pressed to form a cathode.

Anode active materials having the compositions shown in Table 1 below, carbon black, styrene-butadiene rubber (SBR) and carboxymethyl cellulose (CMC) were dispersed in water by a weight ratio of 96:3:1:1 to form an anode slurry.

The anode slurry was uniformly coated on a copper foil having a thickness of 8 μm, and then dried and pressed to prepare an anode.

An electrode assembly was manufactured by interposing a separator (13 μm thick, polyethylene film) between the cathode and the anode.

A 1M $LiPF_6$ solution (in a mixed solvent of EC/EMC 25:75 v/v) was prepared. An electrolyte solution was prepared by adding fluoroethylene carbonate (FEC) as a $CO_2$ supply source to the $LiPF_6$ solution in an amount shown in Table 1 based on a total weight of the electrolyte solution.

The electrode assembly was inserted in a pouch, the electrolyte was injected, and the pouch was sealed to obtain a lithium secondary battery.

## Experimental Example 1: Component Analysis of SEI Layer

Lithium secondary batteries of Examples and Comparative Examples were charged at 0.33C CC/CV (4.12V, 0.05C, SOC 96%, CUT-OFF), and left at 60 °C for 4 weeks.

Thereafter, the lithium secondary batteries were charged at 0.33C CC/CV (4.12V, 0.05C, SOC 96%, CUT-OFF) and discharged (2.73V, SOC 2% CUT-OFF).

The charging and discharging were repeatedly performed 100 times, and the lithium secondary batteries were disassembled to separate the anode.

An X-ray photoelectron spectroscopy (XPS) was performed on the SEI layer formed on a surface of the anode. From the XPS analysis spectrum, a ratio of a C-O peak intensity (detected in a 286 eV to 288 eV region) relative to a Li-F peak intensity (detected in a 686 eV to 688 eV region) was calculated.

Specifically, in the XPS analysis, ESCALAB 250xi (Thermo Fisher Scientific) was used, an Al k alpha beam was used as an X-ray light source, a voltage was 1486.68 eV, and a beam size was 650 μm. Analysis of the measured XPS results was performed in a CAE (constant analyzer energy) mode.

Experimental Example 2: Evaluation on Life-span Properties of Lithium Secondary Battery

Lithium secondary batteries of Examples and Comparative Examples were charged at 0.33C CC/CV (4.12V, 0.05C, SOC 96%, CUT-OFF), and left at 60 °C for 4 weeks.

Thereafter, the lithium secondary batteries were charged at 0.33C CC/CV (4.12V, 0.05C, SOC 96%, CUT-OFF) and discharged (2.73V, SOC 2% CUT-OFF).

The charge and the discharge were repeatedly performed 700 times, and a point at which the discharge capacity suddenly dropped was identified.

The point at which the discharge capacity suddenly dropped was set as a point at which a slope changed drastically in a discharge capacity retention (y-axis)-charge and discharge cycles (x-axis) graph (e.g., a slope change ratio was greater than 2 before and after the capacity drop point).

[Table 1]

| | lithium metal oxide | anode active material | $CO_2$ supply source | C-O peak intensity/ Li-F peak intensity | number of cycles at capacity sudden drop occurred |
|---|---|---|---|---|---|
| Example 1 | $LiNi_{0.88}Co_{0.06}Mn_{0.06}O_2$ | Si+Graphite 9:91 w/w | FEC 3.5wt% | 0.54 | about 600 cycles |
| Example 2 | $LiNi_{0.88}CO_{0.06}Mn_{0.06}O_2$ | Si+Graphite 13:87 w/w | FEC 3.5wt% | 0.53 | about 550 cycles |
| Example 3 | $LiNi_{0.88}CO_{0.06}Mn_{0.06}O_2$ | Si+Graphite 15:85 w/w | FEC 3.5wt% | 0.51 | about 250 cycles |
| Example 4 | $LiNi_{0.88}Co_{0.06}Mn_{0.06}O_2$ | Si+Graphite 5:95 w/w | FEC 3.5wt% | 0.40 | about 600 cycles |
| Example 5 | $LiNi_{0.88}Co_{0.06}Mn_{0.06}O_2$ | Si+Graphite 7:93 w/w | FEC 3.5wt% | 0.48 | about 590 cycles |
| Example 6 | NCM 811 | Si+Graphite 9:91 w/w | FEC 3.5wt% | 0.38 | about 330 cycles |
| Comparative Example 1 | $LiNi_{0.88}Co_{0.06}Mn_{0.06}O_2$ | Si+Graphite, 9:91 w/w | - | 0.30 | about 150 cycles |
| Comparative Example 2 | NCM 622 | Si+Graphite 9:91 w/w | FEC 3.5wt% | 0.30 | about 210 cycles |

NCM 622: $LiNi_{0.6}Co_{0.2}Mn_{0.2}O_2$
NCM 811: $LiNi_{0.8}Co_{0.1}Mn_{0.1}O_2$
Graphite: artificial graphite
FEC: fluoroethylene carbonate

Referring to Table 1, the SEI layers of Examples had the ratio of the C-O peak intensity to the Li-F peak intensity in the XPS analysis spectrum (i.e., C-O peak intensity/Li-F peak intensity) greater than those from the SEI layers of Comparative Examples. From the result, it can be confirmed that the SEI layers of Examples contained more $CO_2$-derived material.

The lithium secondary batteries of Examples included the SEI layer having the ratio of the C-O peak intensity to the Li-F peak intensity of a predetermined value (e.g., 0.38) or more, and provided improved life-span properties

compared to those from the lithium secondary batteries of Comparative Examples.

In Comparative Example 2, an amount of $CO_2$ generation by the reaction between the lithium metal oxide particles and FEC at the anode was small, and it is estimated that FEC was decomposed on the surface of the anode to directly form the SEI layer. In this case, a depletion rate of FEC becomes relatively increased, and the life-span properties of the lithium secondary battery may be deteriorated.

Generally, when a content of silicon atoms in the anode becomes higher, a capacity of the lithium secondary battery may be increased, but the life-span properties may be deteriorated due to a repeated volume change of the silicon atoms. However, in an environment where $CO_2$ is sufficient, an amount of $CO_2$-derived material in the SEI layer may be increased as the content of the silicon atoms increases. Accordingly, degradation of the life-span properties due to the silicon atoms can be suppressed. For example, Examples 1 and 2 had a higher silicon atom content than those in Examples 4 and 5, but provided similar life-span properties.

Experimental Example 3: Evaluation on Conversion Ratio of $CO_2$ to SEI layer

To measure a conversion ratio of $CO_2$ to a $CO_2$-derived SEI layer according to charging and discharging voltage conditions of the lithium secondary battery, an evaluation was performed as follows.

Lithium secondary batteries were prepared as shown in Table 2 below, charged at 0.33 C CC/CV (4.12 V, 0.05 C, SOC 96%, CUT-OFF), and then left at 60 °C for 4 weeks to form $CO_2$.

Thereafter, the lithium secondary battery was repeatedly charged and discharged 100 times while changing voltage conditions for charging and discharging as shown in Table 2 below.

The conversion ratio was evaluated by a CO2 reduction ratio as follows.

$$CO_2 \text{ reduction ratio } (\%) = [(CO_2 \text{ measured amount of Reference Example - } CO_2 \text{ measured amount of Example or Comparative Example})/CO_2 \text{ measured amount of Reference Example}] \times 100\ (\%)$$

The amount of $CO_2$ was measured using a gas chromatography method.

After the completion of the evaluation, the lithium secondary battery was disassembled and the anode was separated. A cross-section of the anode was observed with a scanning electron microscope (SEM) to confirm a thickness of the SEI layer.

[Table 2]

| | charge and discharge conditions after charging once | thickness of SEI layer | $CO_2$ reduction ratio |
|---|---|---|---|
| Reference Example | charge and discharge was not performed | - | - |
| Example 1 | 2.73 V ↔ 4.12 V | 0.8 μm | 93.3% |
| Comparative Example 3 | 3 V ↔ 4.12 V | 0.4 μm | 46.8% |
| Comparative Example 4 | 3.68 V ↔ 4.12 V | 0.2 μm | 35.8% |
| Comparative Example 5 | 3.89 V ↔ 4.12 V | not measurable | 3.0% |

Referring to Table 2, the battery of Example 1 was charged and discharged in a predetermined voltage range (e.g., a voltage range including a range of 2.8 V or less), and the $CO_2$ reduction ratio was higher than 90%.

In Comparative Examples 3 to 5, the $CO_2$ reduction ratio was less than 50%.

FIGS. 5 and 6 are X-ray photoelectron spectroscopy (XPS) analysis spectra of SEI layers from Example 1 and Comparative Example 3.

Referring to FIGS. 5 and 6, in the XPS analysis spectrum of the SEI layer of Example 1, the ratio of C-O peak intensity to Li-F peak intensity was about 0.54. In the SEI layer of Comparative Example 3, the peak intensity ratio was

about 0.37. It can be confirmed that the SEI layer of Example 1 contained more $CO_2$-derived material than the SEI layer of Comparative Example 3.

## Claims

**1.** A lithium secondary battery, comprising:

an electrolyte solution comprising a lithium salt, an organic solvent and a $CO_2$ supply source;
a cathode comprising a cathode active material layer, the cathode active material layer comprising a lithium metal oxide particle that contains nickel; and
an anode comprising an anode active material layer and a solid electrolyte interface (SEI) layer formed on the anode active material layer, the anode active material layer comprising a silicon-based active material,
wherein a ratio of a C-O peak intensity to a Li-F peak intensity is 0.38 or more in an X-ray photoelectron spectroscopy spectrum of the SEI layer.

**2.** The lithium secondary battery of claim 1, wherein the ratio of the C-O peak intensity to the Li-F peak intensity is 0.5 or more.

**3.** The lithium secondary battery of any one of claims 1 and 2, wherein the SEI layer comprises a $CO_2$-derived material.

**4.** The lithium secondary battery of any one of claims 1 to 3, wherein the SEI layer comprises a reaction product of $CO_2$ and the silicon-based active material.

**5.** The lithium secondary battery of any one of claims 1 to 4, wherein the SEI layer has a thickness of 0.8 $\mu$m or more.

**6.** The lithium secondary battery of any one of claims 1 to 5, wherein a content of the $CO_2$ supply source is in a range from 1 wt% to 20 wt% based on a total weight of the electrolyte solution.

**7.** The lithium secondary battery of any one of claims 1 to 6, wherein the $CO_2$ supply source comprises a compound represented by Chemical Formula 1 below:

[Chemical Formula 1]

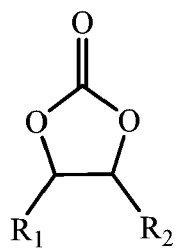

wherein, in Chemical Formula 1, $R_1$ and $R_2$ are each independently hydrogen, halogen or a $C_1$-$C_3$ alkyl group, provided that at least one of $R_1$ and $R_2$ is F.

**8.** The lithium secondary battery of any one of claims 1 to 7, wherein the anode active material layer further comprises a graphite-based active material.

**9.** The lithium secondary battery of any one of claims 1 to 8, wherein a content of nickel in the lithium metal oxide particle is 80 mol% or more based on a total number of moles of all elements excluding lithium and oxygen.

**10.** The lithium secondary battery of any one of claims 1 to 9, wherein a content of silicon atoms is in a range from 7 wt% to 15 wt% based on a total weight of the anode active material layer.

**11.** A method of fabricating a lithium secondary battery, comprising:

preparing a preliminary lithium secondary battery, the preliminary lithium secondary battery comprising:

an electrolyte solution comprising a lithium salt, an organic solvent and a $CO_2$ supply source;
a cathode comprising a cathode active material layer, the cathode active material layer comprising a lithium metal oxide particle that contains nickel; and
an anode comprising an anode active material layer, the anode active material layer comprising a silicon-based active material; and

charging and discharging the preliminary lithium secondary battery in a voltage range including a range of 2.8 V or less to form a solid electrolyte interface (SEI) layer on the anode active material layer,
wherein a ratio of a C-O peak intensity to a Li-F peak intensity is 0.38 or more in an X-ray photoelectron spectroscopy spectrum of the SEI layer.

**12.** The method of claim 11, wherein preparing the preliminary secondary lithium battery comprises aging the preliminary lithium secondary battery at a temperature of 30 °C to 80° C for 1 day to 50 days.

**13.** The method of any one of claims 11 and 12, wherein forming the SEI layer comprises:

generating $CO_2$ through a reaction between the lithium metal oxide particle and the $CO_2$ supply source; and
reacting generated $CO_2$ with the silicon-based active material.

**14.** The method of claim 13, wherein forming the SEI layer comprises converting 90% or more of generated $CO_2$ into the SEI layer.

**15.** The method according to any one of claims 11 to 14, wherein performing the charging and discharging once each is defined as a charge and discharge cycle, and
10 or more of the charge and discharge cycles are repeated to form the SEI layer.

FIG. 1

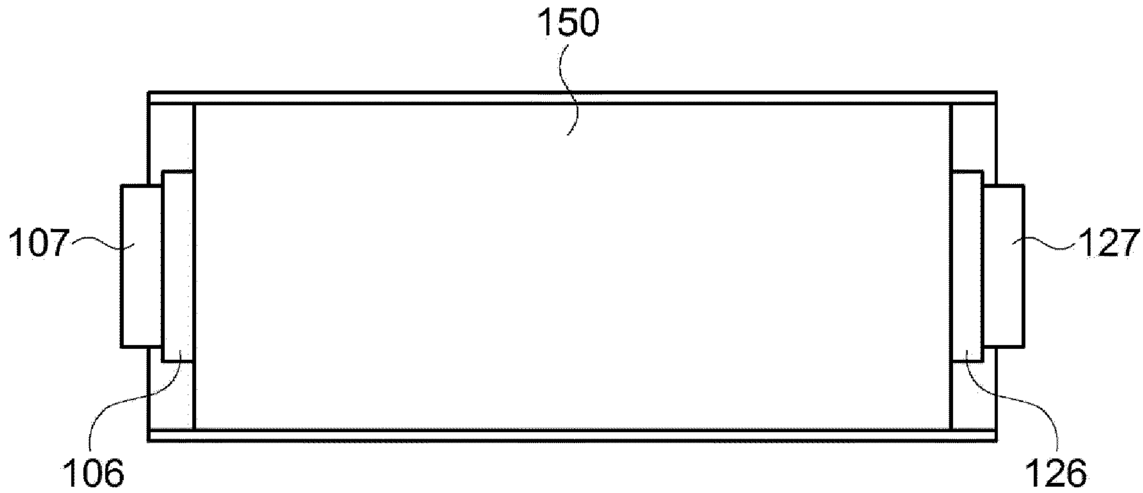


FIG. 2

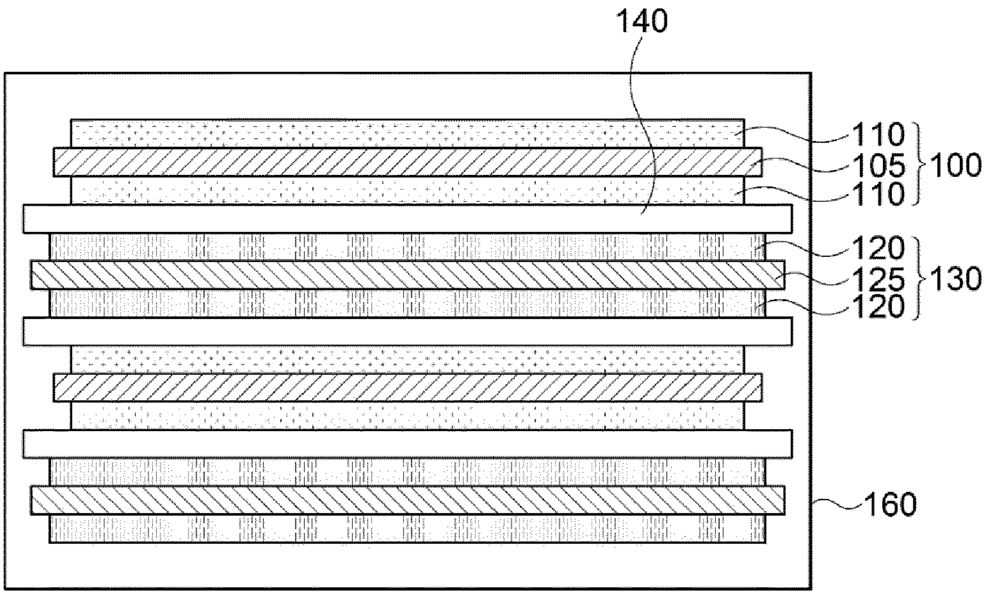

FIG. 3

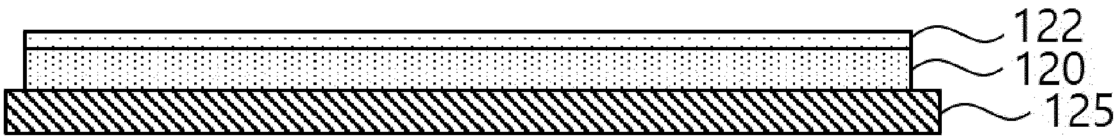
122
120
125

FIG. 4

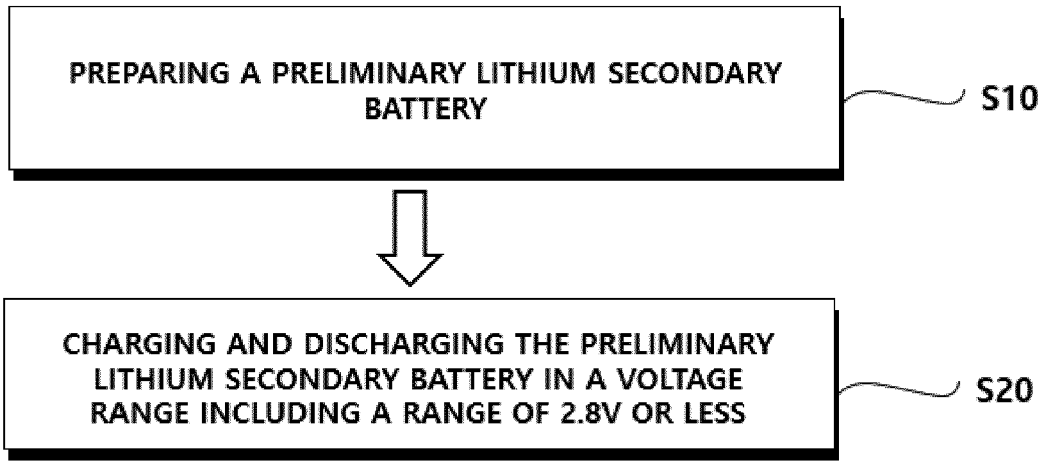
PREPARING A PRELIMINARY LITHIUM SECONDARY BATTERY
S10
CHARGING AND DISCHARGING THE PRELIMINARY LITHIUM SECONDARY BATTERY IN A VOLTAGE RANGE INCLUDING A RANGE OF 2.8V OR LESS
S20

FIG. 5

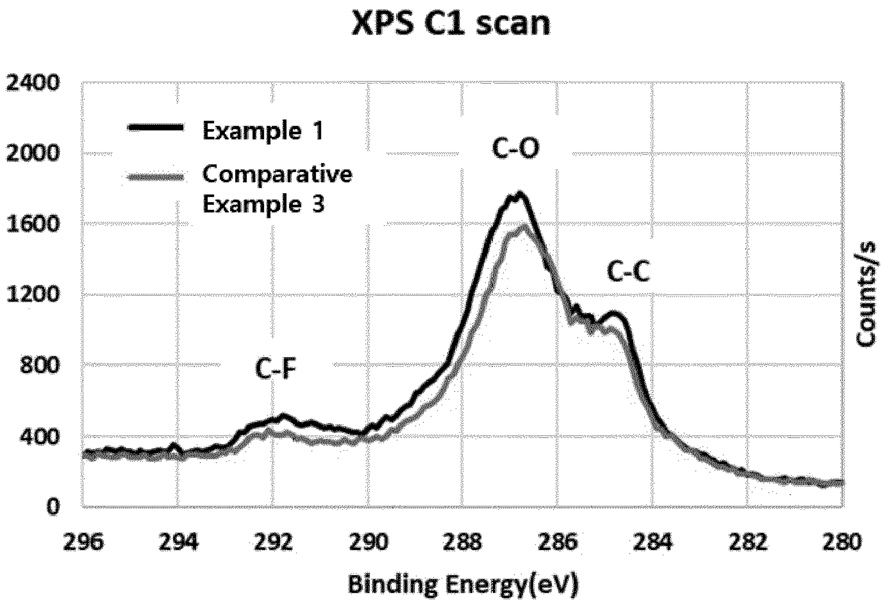
XPS C1 scan
Example 1
Comparative Example 3
C-O
C-C
C-F
2400
2000
1600
1200
800
400
0
296
294
292
290
288
286
284
282
280
Binding Energy(eV)
Counts/s

FIG. 6

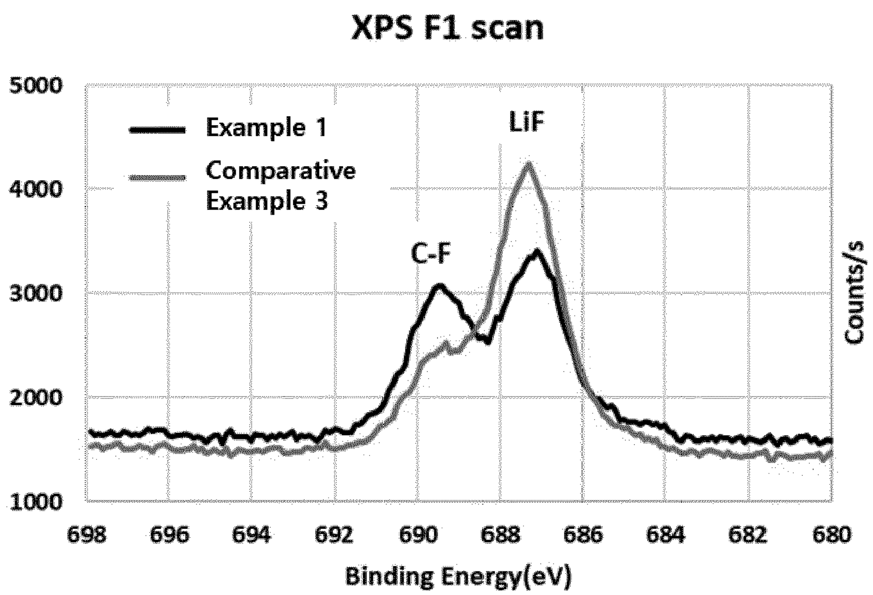
XPS F1 scan
Example 1
Comparative Example 3
LiF
C-F
5000
4000
3000
2000
1000
698
696
694
692
690
688
686
684
682
680
Binding Energy(eV)
Counts/s